# EUROPEAN PATENT APPLICATION

(11) **EP 4 783 197 A1**
(43) Date of publication of application: **29.07.2026**
(21) Application number: 24868255.1
(22) Date of filing: 17.09.2024
(51) Int. Cl.: H01B 1/08, H01B 1/06, H01B 13/00, H01M 4/36

(54) **SOLID ELECTROLYTE, COATED ACTIVE MATERIAL, ELECTRODE, BATTERY, AND METHOD FOR PRODUCING SOLID ELECTROLYTE**

(30) Priority: 20.09.2023 JP 2023152034
(71) Applicant: Panasonic Intellectual Property Management Co., Ltd., Kadoma-shi, Osaka 571-0057 (JP)
(72) Inventor: MASUMOTO, Yui, kadoma-shi, Osaka 571-0057 (JP); TSUJITA, Takuji, kadoma-shi, Osaka 571-0057 (JP); TAKEZAWA, Hideharu, kadoma-shi, Osaka 571-0057 (JP)
(74) Representative: Eisenführ Speiser
(86) International application number: PCT/JP2024/033148
(87) International publication number: WO 2025/063178

(57) **Abstract**

A solid electrolyte 10 of the present disclosure contains Li, Ti, F, and O, and a proportion of a Ti-O bond in a group of bonds to Ti is 6% or more. The solid electrolyte 10 may further contain at least one element selected from the group consisting of Be, Mg, Ca, Sr, Ba, Sc, Y, Al, Ga, In, Zr, and Sn. The solid electrolyte 10 may be manufactured by applying a liquid containing oxygen to a quasi-solid electrolyte containing Li, Ti, and F, and then subjecting the quasi-solid electrolyte to a thermal treatment to remove the liquid.

## Description

### TECHNICAL FIELD

The present disclosure relates to a solid electrolyte, a coated active material, an electrode, a battery, and a method for manufacturing a solid electrolyte.

### BACKGROUND ART

As described in Patent Literature 1, fluoride solid electrolytes have attracted attention as solid electrolytes having a high oxidation resistance.

### CITATION LIST

### Patent Literature

Patent Literature 1: WO 2021/186809 A1

### SUMMARY OF INVENTION

### Technical Problem

Fluoride solid electrolytes have an issue of low ionic conductivity. There has been a demand for further improving output characteristics of a battery by utilizing a fluoride solid electrolyte having a high ionic conductivity.

### Solution to Problem

The present disclosure provides a solid electrolyte containing Li, Ti, F, and O, wherein
a proportion of a Ti-O bond in a group of bonds to Ti is 6% or more.

### Advantageous Effects of Invention

The solid electrolyte of the present disclosure can improve the output characteristics of a battery.

### BRIEF DESCRIPTION OF DRAWINGS

FIG. 1 is a diagram showing a solid electrolyte according to Embodiment 1 of the present disclosure.
FIG. 2 is a process chart showing a method for manufacturing a solid electrolyte.
FIG. 3 is a cross-sectional view showing a schematic configuration of a coated active material according to Embodiment 2 of the present disclosure.
FIG. 4 is a schematic cross-sectional view of a lithium secondary battery according to Embodiment 3 of the present disclosure.
FIG. 5 is a graph showing 2C discharge capacity of lithium secondary batteries of Examples 1 to 3 and Comparative Example 1.
FIG. 6 shows an XPS spectrum immediately after synthesizing LTAF and an XPS spectrum after 7 days of exposure to the atmosphere.

### DESCRIPTION OF EMBODIMENTS

Embodiments of the present disclosure will be described below with reference to the attached drawings. The present disclosure is not limited to the following embodiments.

### (Embodiment 1)

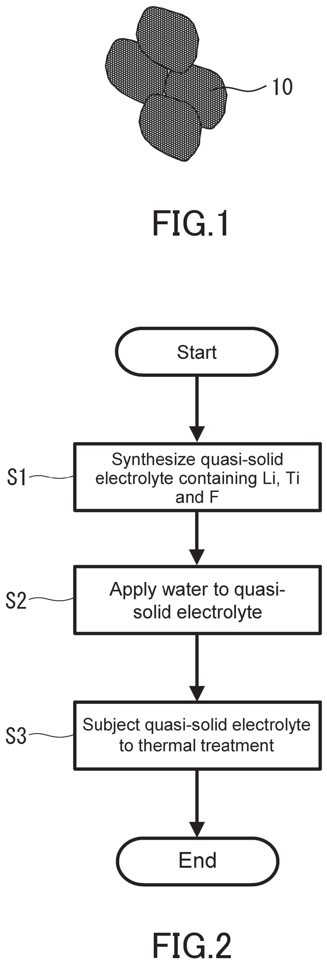

FIG. 1 is a diagram showing a solid electrolyte 10 according to Embodiment 1 of the present disclosure. The solid electrolyte 10 contains Li, Ti, F, and O. The solid electrolyte 10 is a fluoride solid electrolyte, having a high oxidation resistance because of the high electronegativity of fluorine.

A proportion of a Ti-O bond in a group of bonds to Ti contained in the solid electrolyte 10 is 6% or more. In other words, a sum of a proportion of a Ti-F bond and a proportion of a Ti-O-F bond is 94% or less. The solid electrolyte 10 of the present embodiment can be obtained by incorporating oxygen into a solid electrolyte containing Li, Ti, and F. The solid electrolyte 10 of the present embodiment is capable of improving the output characteristics of a battery compared with a solid electrolyte having a low proportion of a Ti-O bond, that is, compared with a solid electrolyte that does not contain oxygen in an amount exceeding the amount of oxygen introduced through natural oxidation. In particular, the discharge capacity at high rates is improved. One reason therefor is considered as follows. That is, incorporating oxygen improves the lithium ionic conductivity of the solid electrolyte containing Li, Ti, and F.

The group of bonds to Ti means a group of anion-to-Ti bonds. Titanium (Ti), fluorine (F), and oxygen (O) typically form compounds such as TiF₄, TiOF₂, and TiO₂. Therefore, the group of the bonds to Ti are represented by a Ti-F bond, a Ti-O-F bond, and a Ti-O bond. By adjusting the proportion of the Ti-O bond in the group of bonds, a solid electrolyte 10 suitable for improving the output characteristics of a battery can be obtained.

The respective proportions of the Ti-F bond, the Ti-O-F bond, and the Ti-O bond can be calculated by the following method. First, X-ray photoelectron spectroscopy (XPS) measurement is performed for the solid electrolyte 10. A Ti2p spectrum in the binding energy range from 448 eV to 486 eV is divided to separate the respective peaks of TiF₄, TiOF₂, and TiO₂. The peak for the TiF₄ is a peak around 462.0 eV. The peak for the TiOF₂ is a peak around 460.2 eV. The peak for the TiO₂ is a peak around 458.3 eV. A proportion of the area of the peak attributed to TiF₄ to a sum of the areas of the separated peaks is calculated as the proportion of a Ti-F bond (unit: %). A proportion of the area of a peak attributed to TiOF₂ to a sum of the areas of the separated peaks is calculated as the proportion of a Ti-O-F bond (unit: %). A proportion of the area of the peak attributed to TiO₂ to a sum of the areas of the separated peaks is calculated as the proportion of a Ti-O bond (unit: %).

The proportion of the Ti-O bond may be 30% or more. In other words, a sum of the proportion of the Ti-F bond and the proportion of the Ti-O-F bond may be 70% or less. With this configuration, the effect of improving the output characteristics of the battery is sufficiently ensured.

The upper limit of the proportion of the Ti-O bond is not particularly limited. The upper limit of the proportion of the Ti-O bond may be 80%, or may be 40%. In other words, the lower limit of the sum of the proportion of the Ti-F bond and the proportion of the Ti-O-F bond may be 20% or may be 60%. With this configuration, oxygen can be incorporated into the solid electrolyte 10 while the framework structure (crystal structure) of the solid electrolyte 10 is maintained. Maintaining the framework structure of the solid electrolyte 10 enables the solid electrolyte 10 to exhibit high ionic conductivity.

The proportion of the Ti-O bond may be 6% or more and 80% or less, 6% or more and 40% or less, 30% or more and 80% or less, or 30% or more and 40% or less. The sum of the proportion of the Ti-F bond and the proportion of the Ti-O-F bond may be 20% or more and 94% or less, 60% or more and 94% or less, 20% or more and 70% or less, or 60% or more and 70% or less.

The solid electrolyte 10 has lithium ion conductivity. The solid electrolyte 10 is suitable for a lithium ion secondary battery.

The solid electrolyte 10 may consist essentially of Li, Ti, F, and O. Here, the sentence "the solid electrolyte 10 consists essentially of Li, Ti, F, and O" means that the molar ratio (i.e., molar fraction) of a sum of amounts of substance of Li, Ti, F and O to a sum of amounts of substance of all elements constituting the solid electrolyte 10 is 90% or more. In one example, this molar ratio may be 95% or more. The solid electrolyte 10 may consist only of Li, Ti, F, and O.

The solid electrolyte 10 may further contain at least one element selected from the group consisting of Be, Mg, Ca, Sr, Ba, Sc, Y, Al, Ga, In, Zr, and Sn. Containing the elements may improve the ionic conductivity of the solid electrolyte 10. From the viewpoint of the cost and the ionic conductivity, at least one element selected from the group consisting of Ca, Mg, Al, Y, and Zr is desirable, and Al is more desirable.

The solid electrolyte 10 may consist essentially of Li, Ti, M, F, and O. Here, the M is at least one element selected from the group consisting of Be, Mg, Ca, Sr, Ba, Sc, Y, Al, Ga, In, Zr, and Sn. The sentence "the solid electrolyte 10 consists essentially of Li, Ti, M, F, and O" means that the molar ratio (i.e., molar fraction) of a sum of amounts of substance of Li, Ti, the M, F, and O to a sum of amounts of substance of all elements constituting the solid electrolyte 10 is 90% or more. In one example, this molar ratio may be 95% or more. The solid electrolyte 10 may consist only of Li, Ti, the M, F, and O.

The solid electrolyte 10 may contain elements that are unavoidably mixed. Examples of the elements include hydrogen and nitrogen. These elements may be contained in the raw material powder of the solid electrolyte 10 or may be present in the atmosphere for manufacturing or storing the solid electrolyte 10.

To further increase the ionic conductivity of the solid electrolyte 10, a ratio of an amount of substance of Li to a total amount of substance of Ti and the M may be 1.7 or more and 4.2 or less.

The solid electrolyte 10 has a composition represented by the following formula (1), for example. In the formula (1), 0 ≤ x < 1, 0 < b ≤ 2, and 0 < y ≤ 2.8 are satisfied. In the case where the solid electrolyte 10 has a composition represented by the following formula (1), the solid electrolyte 10 exhibits a favorable ionic conductivity.

Li_{6-(4-x)b}(Ti₁₋ₓMₓ)_{b}F_{6-2y}O_{y} Formula (1)

To increase the ionic conductivity of the solid electrolyte 10, 0.1 ≤ x ≤ 0.9 in the formula (1) may be satisfied.

To increase the ionic conductivity of the solid electrolyte 10, 0.8 ≤ b ≤ 1.2 in the formula (1) may be satisfied.

To increase the ionic conductivity of the solid electrolyte 10, 0.1 ≤ y ≤ 2.5 in the formula (1) may be satisfied.

The solid electrolyte 10 may have a crystalline phase. The solid electrolyte 10 may include an amorphous phase.

To increase the ionic conductivity, the solid electrolyte 10 may contain an anion other than F and O. The anion other than F and O is at least one selected from the group consisting of CI, Br, I, and Se.

The solid electrolyte 10 is desirably free of sulfur. A sulfur-free solid electrolyte does not generate hydrogen sulfide even when exposed to the atmosphere, thereby exhibiting superior safety.

The shape of the solid electrolyte 10 is not particularly limited. The solid electrolyte 10 may have a shape of a particle. Examples of shape of the particle include a shape of needle, a sphere, and an ellipsoid. The solid electrolyte 10 may also be shaped as a pellet, a plate, or a thin film.

In the case where the solid electrolyte 10 has a shape of particle, the particle of the solid electrolyte 10 may have a median diameter of 0.01 µm or more and 100 µm or less. This enables the solid electrolyte 10 to exhibit a higher ionic conductivity. Furthermore, in the case where the solid electrolyte 10 is mixed with other materials such as an active material, the dispersion state between the solid electrolyte 10 and the other materials becomes favorable. The term "median diameter" herein means a particle diameter at 50% in a volume-based cumulative particle size distribution. The volume-based particle size distribution is measured, for example, using a laser diffraction measurement apparatus.

FIG. 2 is a process chart showing a method for manufacturing the solid electrolyte 10. According to the manufacturing method of the present embodiment, the solid electrolyte 10 can be efficiently manufactured.

In Step 1, a quasi-solid electrolyte containing Li, Ti, and F is synthesized. The quasi-solid electrolyte containing Li, Ti, and F can be synthesized, for example, by the following method. First, raw material powders are mixed to obtain a quasi-solid electrolyte having a target composition. The raw material powder is, for example, a fluoride of each element. In the case where the target composition is Li_{2.7}Ti_{0.3}Al_{0.7}F₆, LiF, TiF₄, and AlF₃ are mixed in a molar ratio of 2.7:0.3:0.7. The raw material powders are then reacted with each other by use of a mixing apparatus such as a planetary ball mill. That is, the raw material powders are caused to react with each other by a mechanochemical milling method. This yields a quasi-solid electrolyte having the target composition.

In Step S2, a liquid containing oxygen is applied to the quasi-solid electrolyte. The liquid containing oxygen is capable of oxidizing the quasi-solid electrolyte, thereby increasing the Ti-O bond. By performing a thermal treatment while the liquid containing oxygen is in contact with the quasi-solid electrolyte, the quasi-solid electrolyte can be efficiently oxidized.

The liquid containing oxygen includes, for example, water. Water can form a bond with Ti and efficiently oxidize the solid electrolyte through the thermal treatment. The liquid containing oxygen may be ethanol, N-methylpyrrolidone, or the like. The liquid containing oxygen may contain a plurality of components.

In Step S3, the quasi-solid electrolyte is subjected to a thermal treatment to remove the liquid containing oxygen. This yields the solid electrolyte 10 of the present embodiment.

The ambient temperature during the thermal treatment is, for example, 180°C or higher. At such a temperature, the solid electrolyte can be efficiently oxidized. The upper limit of the ambient temperature during the thermal treatment is not particularly limited and is, for example, 300°C.

### (Embodiment 2)

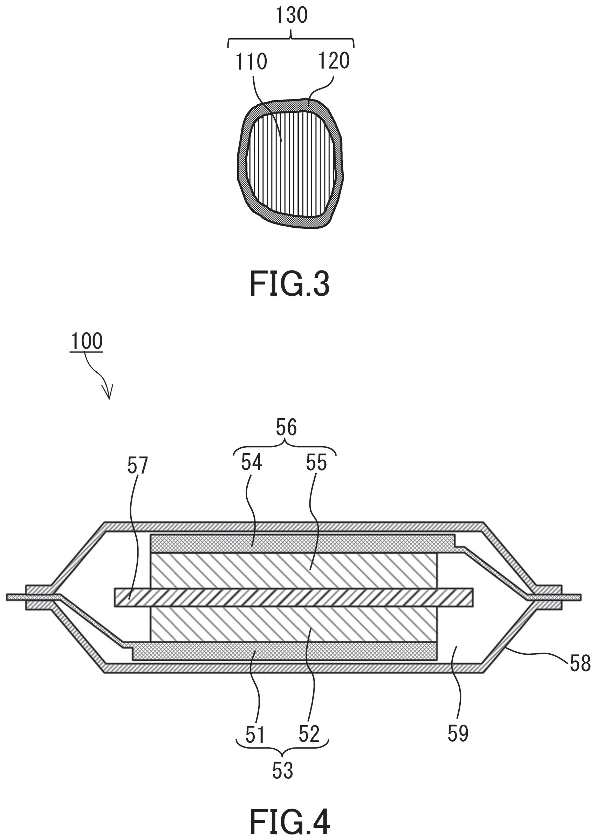

FIG. 3 is a cross-sectional view of a coated active material according to Embodiment 2 of the present disclosure. A coated active material 130 includes an active material 110 and a coating layer 120. The coating layer 120 covers at least a portion of a surface of a particle of the active material 110. The active material 110 may be a secondary particle formed by agglomeration of a plurality of primary particles. The coating layer 120 may coat at least a portion of a surface of the secondary particle of the active material 110. The coating layer 120 includes the solid electrolyte 10 of Embodiment 1. In the case where the active material 110 is coated with the solid electrolyte 10, a direct contact between the active material 110 and other materials, such as an electrolytic solution, is prevented. In particular, according to the present embodiment, the solid electrolyte 10 included in the coating layer 120 includes a large number of Ti-O bonds. The high content of Ti-O bonds suppresses activity of the solid electrolyte 10 with respect to the electrolytic solution. Consequently, even in the case where the electrolytic solution includes a solvent or the like with a high oxygen content, the coating layer 120 is resistant to deterioration during charge and discharge of a battery. As a result, the output characteristics of the battery using the coated active material 130 are improved.

The coating layer 120 may coat only a portion of the surface of the particle of the active material 110. In this case, the particles of the active material 110 are in direct contact with each other through the portions not coated with the coating layer 120, thereby ensuring electron conductivity between the particles of the active material 110. Alternatively, the coating layer 120 may uniformly coat the surface of the particle of the active material 110.

The coating layer 120 may include the solid electrolyte 10 as its main component, or may include only the solid electrolyte 10. The term "main component" means a component whose content is highest on a mass basis. The phrase "including only the solid electrolyte 10" means that, except unavoidable impurities, no materials other than the solid electrolyte 10 are intentionally added.

The coating layer 120 has a thickness of desirably 1 nm or more and 500 nm or less, more desirably 1 nm or more and 100 nm or less, and further desirably 1 nm or more and 20 nm or less. When the thickness of the coating layer 120 is appropriately adjusted, contact between the active material 110 and the electrolytic solution can be sufficiently suppressed. The thickness of the coating layer 120 can be determined by thinning the coated active material 130 by any method such as ion milling, and observing the cross-section of the coated active material 130 with a transmission electron microscope. The average value of the thicknesses measured at any positions (for example, five points) can be considered as the thickness of the coating layer 120. Transmission electron microscopy observation allows identification of the position of the interface between the coating layer 120 and the active material 110 within the coated active material 130.

The active material 110 includes a material having properties of occluding and releasing metal ions such as lithium ions.

In the present embodiment, the active material 110 may be an oxide. The active material 110 may be an oxide free of Ti, except unavoidable impurities.

In the case where the active material 110 is a positive electrode active material, materials such as a lithium-containing transition metal oxide, a lithium-containing transition metal phosphate, a transition metal fluoride, a polyanion material, a fluorinated polyanion material, a transition metal sulfide, a transition metal oxysulfide, or a transition metal oxynitride can be used as the active material 110. In particular, in the case where a lithium-containing transition metal oxide or a lithium-containing transition metal phosphate is used as the active material 110, it is possible to reduce cost for manufacturing a battery and increase the average discharge voltage. Examples of the lithium-containing transition metal oxide include lithium cobalt oxide, lithium nickel cobalt aluminum oxide, lithium nickel cobalt manganese oxide, and lithium nickel manganese oxide. Examples of the lithium-containing transition metal phosphate include lithium iron phosphate, lithium vanadium phosphate, lithium cobalt phosphate, and lithium nickel phosphate.

The active material 110 may be a negative electrode active material. Examples of the negative electrode active material include lithium titanate, graphite, silicon, a silicon compound, and a Ni-Bi alloy.

The shape of the particle of the active material 110 is not limited to a particular one. The shape of the particle of the active material 110 can be the shape of a sphere, an ellipsoid, a flake, or a fiber.

The coated active material 130 can be manufactured by the following method.

A powder of the active material 110 and a powder of the solid electrolyte 10 are mixed at an appropriate ratio to obtain a mixture. The mixture is subjected to milling to provide mechanical energy to the mixture. A mixing machine such as a ball mill can be used for the milling. The milling may be performed in a dry and inert atmosphere to suppress oxidation of the materials.

The coated active material 130 may be manufactured by a dry composite particle forming method. Processing by the dry composite particle forming method includes providing mechanical energy generated by at least one selected from the group consisting of impact, compression, and shearing to the active material 110 and the solid electrolyte 10. The active material 110 and the solid electrolyte 10 are mixed at an appropriate ratio.

The apparatus used in manufacturing of the coated active material 130 is not limited to a particular one, and can be an apparatus capable of providing mechanical energy generated by impact, compression, or shearing to the mixture of the active material 110 and the solid electrolyte 10. Example of the apparatus capable of providing such mechanical energy include processing apparatuses (composite particle forming machines) such as a ball mill, Mechanofusion (manufactured by HOSOKAWA MICRON CORPORATION), Nobilta (manufactured by HOSOKAWA MICRON CORPORATION), and BALANCE GRAN (manufactured by FREUND-TURBO CORPORATION). Alternatively, the coated active material 130 may be manufactured by a liquid-phase method such as a sol-gel method.

A second coating layer may be provided between the active material 110 and the coating layer 120. The second coating layer may be formed from an oxide solid electrolyte such as LISICON or lithium niobate.

It is not essential that the solid electrolyte 10 be used as a coating material for the active material 110. The solid electrolyte 10 may be used in the electrolyte layer of the solid-state battery.

### (Embodiment 3)

FIG. 4 is a schematic cross-sectional view of a lithium secondary battery according to Embodiment 3 of the present disclosure. A lithium secondary battery 100 includes a positive electrode 53, a negative electrode 56, an electrolyte layer 57, an outer casing 58, and a non-aqueous electrolytic solution 59. The positive electrode 53 includes a positive electrode current collector 51 and a positive electrode active material layer 52. The positive electrode active material layer 52 is provided on the positive electrode current collector 51. The negative electrode 56 includes a negative electrode current collector 54 and a negative electrode active material layer 55. The negative electrode active material layer 55 is provided on the negative electrode current collector 54. The electrolyte layer 57 is placed between the positive electrode 53 and the negative electrode 56. The electrolyte layer 57 is a separator. The positive electrode 53, the negative electrode 56, the electrolyte layer 57, and the non-aqueous electrolytic solution 59 are enclosed within the outer casing 58.

The positive electrode 53 or the negative electrode 56 includes the solid electrolyte 10 of Embodiment 1. Specifically, the positive electrode active material layer 52 or the negative electrode active material layer 55 include the coated active material 130 of Embodiment 2. The solid electrolyte 10 and the coated active material 130 exhibit excellent durability against the non-aqueous electrolytic solution 59, thereby improving the output characteristics of the lithium secondary battery 100.

The coated active material 130 is typically included in the positive electrode 53.

The positive electrode current collector 51 is a foil made of, for example, a metal material such as aluminum, stainless steel, titanium, or an alloy thereof. The negative electrode current collector 54 is a foil made of, for example, a metal material such as stainless steel, nickel, copper, or an alloy thereof.

The positive electrode active material layer 52 and the negative electrode active material layer 55 may include a conductive additive, an ion conductor, a binder, or the like.

The non-aqueous electrolytic solution 59 is impregnated into the positive electrode 53, the negative electrode 56, and the electrolyte layer 57. The non-aqueous electrolytic solution 59 may also fill the internal space of the outer casing 58.

The non-aqueous electrolytic solution 59 includes a non-aqueous solvent and a lithium salt.

Examples of the non-aqueous solvent include a cyclic carbonate ester, a chain carbonate ester, an ester, a cyclic ether, a chain ether, a nitrile, an amide, a lactone, or the like. Any non-aqueous solvent selected from these examples may be used, or two or more thereof may be combined in use. Examples of solvents with a high oxygen content include lactones. A specific example of lactone is γ-butyrolactone. In the case where lactones are contained in the electrolytic solution, the coated active material 130 of the present disclosure can exhibit higher effectiveness. The term "lactone" means a compound having a lactone ring. A lactone ring means a heterocyclic ring including an ester group within its ring.

Examples of the lithium salt include lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, and lithium difluoro(oxalato)borate. Any one electrolyte salt selected from these examples may be used, or two or more thereof may be combined in use.

The electrolyte layer 57 has lithium ion conductivity. The material of the electrolyte layer 57 is not particularly limited as long as lithium ion passage is permitted. The material of the electrolyte layer 57 may be at least one selected from the group consisting of a solid electrolyte, a gel electrolyte, an ion exchange resin membrane such as a lithium cation exchange resin, a semipermeable membrane, and a porous membrane. An electrolyte layer 57 made from any of these materials can sufficiently ensure the safety of the lithium secondary battery 100. Examples of the solid electrolyte include a sulfide solid electrolyte such as Li₂S-P₂S₅, and an oxide solid electrolyte such as Li₇La₃Zr₂O₁₂ (LLZ). Examples of the gel electrolyte include a gel electrolyte including a fluororesin such as PVdF. Examples of the ion exchange resin membrane include a cation exchange membrane and an anion exchange membrane. Examples of the porous membrane include a porous membrane made of polyolefin resin and a porous membranes made of glass paper obtainable by weaving glass fibers into a nonwoven fabric. The electrolyte layer 57 has a thickness of, for example, 0.001 µm or more and 500 µm or less.

The shape of the lithium secondary battery 100 is not particularly limited. The lithium secondary battery 100 may be in a variety of shapes, such as a coin type, a cylindrical type, a square type, a sheet type, a button type, a flat type, or a laminated type.

The lithium secondary battery 100 may be a solid-state battery that does not use a non-aqueous electrolytic solution. Even in such a solid-state battery, the coated active material 130 may deteriorate due to other materials such as the solid electrolyte. Suppressing deterioration of the coated active material 130 improves the output characteristics of the lithium secondary battery.

### (Other embodiments)

### (Appendix)

The following techniques are disclosed by the embodiments of the above description.

### (Technique 1)

A solid electrolyte containing Li, Ti, F, and O, wherein
a proportion of a Ti-O bond in a group of bonds to Ti is 6% or more.

With the solid electrolyte of the present disclosure, the output characteristics of a battery can be improved.

### (Technique 2)

The solid electrolyte according to Technique 1, further containing at least one element selected from the group consisting of Be, Mg, Ca, Sr, Ba, Sc, Y, Al, Ga, In, Zr, and Sn. Inclusion of the elements can improve the ionic conductivity of the solid electrolyte.

### (Technique 3)

A coated active material including:
an active material; and
a coating layer covering at least a portion of a surface of a particle of the active material, wherein
the coating layer includes the solid electrolyte according to Technique 1 or 2.

With the coated active material of the present disclosure, the output characteristics of a battery can be improved.

### (Technique 4)

An electrode including the solid electrolyte according to Technique 1 or 2. According to the present disclosure, an electrode with excellent output characteristics can be provided.

### (Technique 5)

A battery including the solid electrolyte according to Technique 1 or 2. According to the present disclosure, a battery with excellent output characteristics can be provided.

### (Technique 6)

A method for manufacturing a solid electrolyte containing Li, Ti, F, and O, the method including:
applying a liquid containing oxygen to a quasi-solid electrolyte containing Li, Ti, and F; and
subjecting the quasi-solid electrolyte to a thermal treatment to remove the liquid.

According to the manufacturing method of the present disclosure, the solid electrolyte of the present disclosure can be efficiently manufactured.

### (Technique 7)

The method according to Technique 6, wherein the liquid includes water. The water forms a bond with Ti and thus can efficiently oxidize the solid electrolyte through a thermal treatment.

### (Technique 8)

The method according to Technique 6, wherein an ambient temperature during the thermal treatment is 180°C or higher. At such a temperature, the solid electrolyte can be efficiently oxidized.

### EXAMPLES

Hereinafter, the details of the present disclosure will be described using Examples and Comparative Example 1. The present disclosure is not limited to the following Examples.

### [Production of quasi-solid electrolyte]

LiF, TiF₄, and AlF₃ each being raw material powders were weighed in an argon atmosphere having a dew point of -60°C or lower so that the molar ratio would be LiF:TiF₄:AlF₃ = 2.7:0.3:0.7. These powders were put into a 45 cc pod of a planetary ball mill together with a 0.5 mmφ ball (25 g). γ-Butyrolactone (GBL) as an organic solvent was dropped into the pod so that a solids rate would be 50 mass%. The solids rate is calculated by {(the mass of the raw materials)/(the mass of the raw materials + the mass of the solvent)} × 100. The mixture was subjected to milling using the planetary ball mill for 12 hours at 500 rpm. After the milling, the ball was removed to obtain a slurry. The slurry was dried with a mantle heater under a nitrogen flow at 200°C for one hour. The resulting solid was crushed in a mortar to give a powder of a quasi-solid electrolyte. The quasi-solid electrolyte had a composition represented by Li_{2.7}Ti_{0.3}Al_{0.7}F₆ (hereinafter referred to as "LTAF").

### (Example 1)

The LTAF powder was placed in a crucible, sprayed with water of the same mass as the LTAF, and left at room temperature for one hour. This was then subjected to a thermal treatment at 200°C for 24 hours. This yielded a solid electrolyte of Example 1.

### (Example 2)

A solid electrolyte of Example 2 was produced by the same method as in Example 1, except that the amount of water was increased to five times the mass of the LTAF.

### (Example 3)

A solid electrolyte of Example 3 was produced by the same method as in Example 1, except that the amount of water was increased to 17 times the mass of the LTAF.

### (Comparative Example 1)

The produced LTAF was used as the solid electrolyte in Comparative Example 1. No treatment with water or heat was performed.

### [XPS measurement]

XPS measurement was performed on the solid electrolytes of Examples 1 to 3 and Comparative Example 1 under the following conditions. In the XPS measurement, Quantera-SXM (manufactured by ULVAC-PHI INC.) was used. The measurement conditions were as follows.
X-ray source: Al monochromatic (25 W, 15 kV)
Electron-ion neutralization gun: ON
Photoelectron take-off angle: 45 degrees

Ti was selected as the element to be measured, and the scanning range of binding energy was set to 450 eV to 480 eV (Ti2p orbital). Peak separation was performed for an XPS spectrum in the range from 455 eV to 486 eV, and the area of each peak was calculated. Specifically, the spectrum was divided to separate a peak attributed to a Ti-F bond, a peak attributed to a Ti-O-F bond, and a peak attributed to a Ti-O bond, and the area (integrated peak area) of each peak was calculated. A proportion (unit: %) of the area of a peak attributed to a Ti-O bond to a sum of the areas of the aforementioned peaks was calculated. A proportion (unit: %) of the area of a peak attributed to a Ti-O-F bond to a sum of the areas of the aforementioned peaks was calculated. A proportion (unit: %) of the area of a peak attributed to a Ti-F bond to a sum of the areas of the aforementioned peaks was calculated. In analysis of the XPS spectrum, peak fitting was performed with the Gaussian-Lorentzian function. Table 1 shows the result.

**[Table 1]**

| | Ti-O bond (%) | Sum of Ti-F bond and Ti-O-F bond (%) |
|---|---|---|
| Example 1 | 6 | 94 |
| Example 2 | 36 | 64 |
| Example 3 | 45 | 55 |
| Comparative Example1 | 5 | 95 |

As shown in Table 1, the proportion of the Ti-O bond in the solid electrolyte of Example 1 was 6%, exceeding the proportion of the Ti-O bond in the solid electrolyte of Comparative Example 1. The Ti-O bond in the solid electrolyte of Comparative Example 1 is presumed to result from natural oxidation. The proportion of the Ti-O bond in the solid electrolyte of Example 2 was 36%. The proportion of the Ti-O bond in the solid electrolyte of Example 3 was 45%. That is, the proportion of the Ti-O bond increased as the amount of water increased.

### [Production of coated active material]

A powder of LiCoO₂ (hereinafter referred to as "LCO") was prepared as the positive electrode active material. Next, a coating layer formed from the solid electrolyte of Example 1 was formed on a surface of the LCO. The coating layer was formed by compression shearing using a composite particle forming machine (NOB-MINI, manufactured by HOSOKAWA MICRON CORPORATION). Specifically, the LCO and the solid electrolyte of Example 1 were weighed so that the volume ratio between the LCO and the solid electrolyte would be 100:3. Processing was performed under the following conditions: blade clearance: 2 mm, rotational speed: 6000 rpm, processing time: 30 min. This yielded the coated active material of Example 1. The thickness of the coating layer was measured using the method described earlier. The thickness of the coating layer was 25 nm.

Coated active materials of Example 2, Example 3, and Comparative Example 1 were produced by the same method as in Example 1, except that the solid electrolytes of Example 2, Example 3, and Comparative Example 1 were used instead of the solid active material of Example 1.

### [Production of lithium secondary battery]

The coated active material of Example 1, acetylene black as a conductive additive, polytetrafluoroethylene as a binder, and a solvent were mixed to obtain a positive electrode compound paste. The ratio of the coated active material, the acetylene black, and the polytetrafluoroethylene, based on mass, was as follows. Coated active material: acetylene black: polytetrafluoroethylene = 90:5:5. The positive electrode compound was obtained by drying the positive electrode compound paste.

A pellet (diameter: 10 mm) was obtained by pressing 100 mg of the positive electrode compound at a pressure of 10 kN/cm². The pellet was dried at 200°C, whereby a positive electrode of Example 1 was obtained.

The positive electrode of Example 1, a polypropylene nonwoven fabric, and a negative electrode were placed in this order inside a coin case. Into the coin case, 90 mg of electrolytic solution were injected. The coin case was sealed with a lid to obtain a lithium secondary battery of Example 1. The electrolytic solution was prepared by dissolving lithium borofluoride (LiBF₄) in γ-butyrolactone. The concentration of the lithium borofluoride in the electrolytic solution was 1.0 mol/L. Metal Li was used as the negative electrode.

Lithium secondary batteries for Example 2, Example 3, and Comparative Example 1 were prepared by the same method as in Example 1 except that the coated active materials of Example 2, Example 3, or Comparative Example 1 were used instead of the coated active material of Example 1.

### [Charge-discharge test]

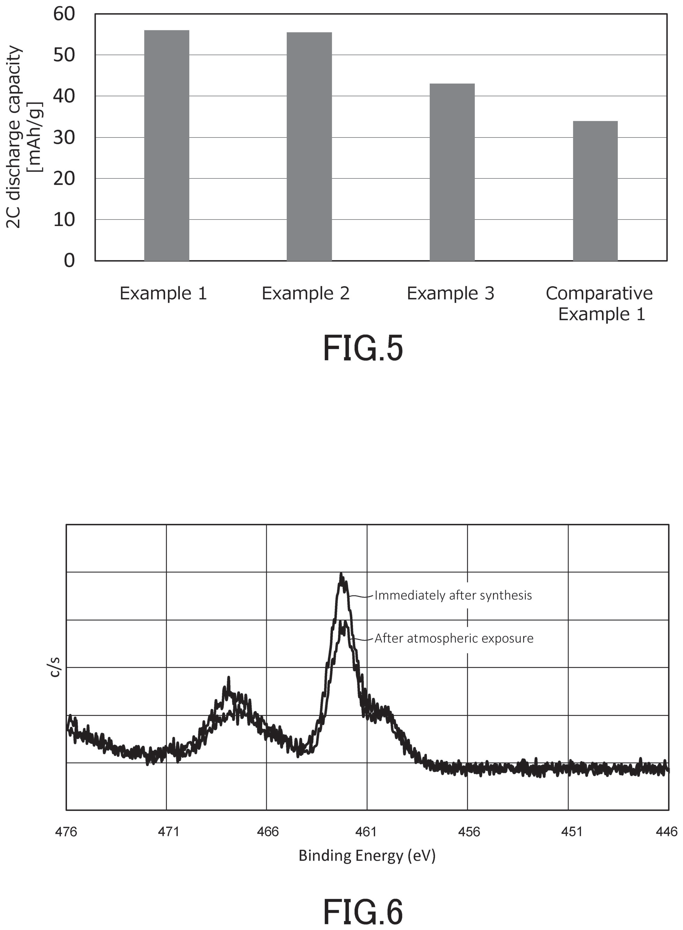

Charge-discharge tests were performed on the lithium secondary batteries of Examples 1 to 3 and Comparative Example 1 by the following procedure. At an ambient temperature of 25°C, constant-current charge was performed at a current rate of 0.02C until the voltage reached 4.05 V. After a one-hour rest period, constant-current discharge was performed at a current rate of 2C until the voltage reached 3.0 V, and the initial discharge capacity was measured. The results are shown in FIG. 5.

FIG. 5 is a graph showing the 2C discharge capacity of the lithium secondary batteries of Examples 1 to 3 and Comparative Example 1. The 2C discharge capacity on the vertical axis indicates the discharge capacity per unit mass of coated active material (unit: mAh/g). As shown in FIG. 5, the 2C discharge capacity of the lithium secondary batteries in Examples 1, 2, and 3 exceeded the 2C discharge capacity of the lithium secondary battery in Comparative Example 1. Using a solid electrolyte with a high proportion of the Ti-O bond in the lithium secondary battery improved the output characteristics of the lithium secondary battery, particularly the discharge capacity at high rates.

### (Reference Example)

XPS measurement was performed immediately after synthesizing LTAF and after 7 days of atmospheric exposure. The results are shown in FIG. 6.

As can be understood from the two spectra shown in FIG. 6, the change in the LTAF spectrum before and after 7 days of atmospheric exposure was negligible. That is, the changes due to oxidation treatment using water and heat, as in the Examples, are significantly different from the changes due to atmospheric exposure. It is predicted that, even if the solid electrolyte of Comparative Example 1 was exposed to the atmosphere for an extended period, the proportion of the Ti-O bond would not change significantly from the value shown in Table 1 (5%).

### INDUSTRIAL APPLICABILITY

The technique of the present disclosure is useful for a lithium secondary battery.

## Claims

1. A solid electrolyte comprising Li, Ti, F, and O, wherein
a proportion of a Ti-O bond in a group of bonds to Ti is 6% or more.

2. The solid electrolyte according to claim 1, further comprising at least one element selected from the group consisting of Be, Mg, Ca, Sr, Ba, Sc, Y, Al, Ga, In, Zr, and Sn.

3. A coated active material comprising:
an active material; and
a coating layer covering at least a portion of a surface of a particle of the active material, wherein
the coating layer comprises the solid electrolyte according to claim 1 or 2.

4. An electrode comprising the solid electrolyte according to claim 1 or 2.

5. A battery comprising the solid electrolyte according to claim 1 or 2.

6. A method for manufacturing a solid electrolyte comprising Li, Ti, F, and O, the method comprising:
applying a liquid containing oxygen to a quasi-solid electrolyte comprising Li, Ti, and F; and
subjecting the quasi-solid electrolyte to a thermal treatment to remove the liquid.

7. The method according to claim 6, wherein
the liquid comprises water.

8. The method according to claim 6, wherein
an ambient temperature during the thermal treatment is 180°C or higher.
